# EUROPEAN PATENT APPLICATION

(11) **EP 4 763 709 A1**
(43) Date of publication of application: **24.06.2026**
(21) Application number: 25212618.0
(22) Date of filing: 31.10.2025
(51) Int. Cl.: B64D 33/02, F01D 21/04, F01D 25/16, F01D 25/24, F16C 27/02, F16C 27/04, B64D 27/40

(54) **CRUMPLING BUSHING**

(30) Priority: 20.12.2024 US 202418989115
(71) Applicant: The Boeing Company, Arlington, VA 22202 (US)
(72) Inventor: Joel, Jason Franklin, Arlington, 22202 (US); Arango Murillo, Jose Camilo, Arlington, 22202 (US)
(74) Representative: Witte, Weller & Partner Patentanwälte mbB

(57) **Abstract**

A bushing configured to receive a connector to connect engine components within an aircraft to absorb forces during a fan blade out. The bushing includes an outer ring, an inner ring that is positioned within and spaced inward from the outer ring with the inner ring having a central opening sized to receive the connector, and spokes that extend between and connect together the outer ring and the inner ring. One or more of the spokes have a linear shape and one or more of the spokes have a non-linear shape. (Fig. 1)

## Description

### TECHNOLOGICAL FIELD

The present disclosure relates generally to the field of bushings and, more specifically, to bushings configured to crumple to absorb an applied load.

### BACKGROUND

A jet engine of an aircraft includes a nacelle that extends around the exterior of the engine. The nacelle forms a housing that protects the engine. The nacelle is often divided into multiple sections. Examples of sections include one or more cowls (e.g., inlet cowl, fan cowl). The nacelle includes an aerodynamic shape due to its exposed position on the exterior of the aircraft, such as on the wing of the aircraft. The nacelle is also shaped to be aerodynamically efficient.

The nacelle is designed to withstand a fan blade off (FBO) event that involves a fan of the engine. During an FBO event, a blade of the fan breaks off or is otherwise released from the fan. The high rotational speed of the fan causes the released blade to be propelled radially outward away from the engine and into contact with a fan case on the interior of the nacelle. The released blade imparts a large amount of energy to the nacelle which in turn is transferred to the aircraft.

The engine should be designed to withstand an FBO event and to maintain the engine and engine parts from departing from the aircraft. To account for an FBO event, existing solutions include increasing the size and strength of components in the engine to handle the increased loads. However, this often leads to the components having a stiffer design which tends to cause the components to pick up additional load. Further, the larger designs are not efficient as they add weight to the aircraft. Thus, there is a need to design an engine to maintain a connection between the fan cowl support beam and the fan case during an FBO event without greatly decreasing the aircraft efficiency.

### SUMMARY

One aspect is directed to a bushing configured to receive a connector to connect engine components within an aircraft to absorb forces during a fan blade out. The bushing comprises an outer ring, an inner ring that is positioned within and spaced inward from the outer ring with the inner ring comprising a central opening sized to receive the connector, and spokes that extend between and connect together the outer ring and the inner ring. One or more of the spokes comprise a linear shape and one or more of the spokes comprise a non-linear shape.

In another aspect, the outer ring and the inner ring comprise circular shapes and are concentric.

In another aspect, the spokes are connected to the outer ring and the inner ring.

In another aspect, one or more of the spokes is connected to just one of the outer ring or the inner ring.

In another aspect, the spokes are arranged in pairs around the inner ring with the pairs comprising a first spoke with the linear shape and a second spoke with the non-linear shape.

In another aspect, one or more of the spokes comprise: an inner end connected to the inner ring and an unconnected outer end; one or more receptacles positioned on the outer ring and comprising raised edges and an intermediate valley; and wherein the unconnected outer ends of spokes is sized to fit within one of the valleys to seat the inner end against the outer ring.

In another aspect, the spokes are evenly spaced apart around the inner ring.

In another aspect, a bearing member is mounted within the inner ring with the bearing member mounted against an inner side of the inner ring and away from an outer side of the inner ring.

In another aspect, the bushing is positioned between a fan case and a fan cowl of the aircraft.

In another aspect, slots extend into the outer perimeter of the outer ring with the slots being spaced apart around the perimeter of the outer ring.

One aspect is directed to a bushing configured to receive a connector to connect engine components within an aircraft. The bushing comprises concentric inner and outer rings. Spokes extend between and connect together the outer ring and the inner ring with the spokes configurated to change shapes based on an amount of applied load. The spokes comprise a first configuration with a first shape when an operational load is applied to the bushing, and a second configuration with a crumpled shape when an event load that is greater than the operational load is applied to the bushing.

In another aspect, one or more of the spokes comprise a linear shape and one or more of the spokes comprise a non-linear shape.

In another aspect, the spokes are arranged in pairs around the inner ring with the pairs comprising one of the spokes with the linear shape and one of the spokes with the non-linear shape.

In another aspect, the outer ring and the inner ring comprises circular shapes in the first configuration.

In another aspect, a bearing member is mounted within the inner ring with the bearing member configured to contact against the connector.

One aspect is directed to a method of protecting engine components within an aircraft with the engine components being connected together by a fastener that is positioned within an opening in a bushing. The method comprises: supporting the connector in an inner ring of the bushing with the inner ring centered within an outer ring of the bushing during operation of the engine; in response to an event load being applied to the bushing through the connector, moving the inner ring in a first direction a first amount towards the outer ring and deforming spokes that extend between the outer ring and the inner ring; and in response to an increase in the event load being applied to the bushing through the connector, moving the inner ring in the first direction a greater second amount and deforming the spokes a greater amount.

In another aspect, the method further comprises moving one or more of the spokes away from the outer ring while moving the inner ring in the first direction.

In another aspect, the method further comprises supporting the connector with the inner ring centered within the outer ring during operational loads and supporting the connector with the inner ring off-centered relative to the outer ring during the event load.

In another aspect, the method further comprises deforming the outer ring in response to the increase in the event load applied to the bushing through the connector.

In another aspect, the method further comprises deforming the bushing and absorbing the force between engine components within the aircraft.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric diagram of an aircraft.
Figure 2 is a schematic section view of an engine of an aircraft.
Figure 3 is a schematic end view of a fan cowl support beam connected to a fan case and a fan cowl.
Figure 4 is a partial isometric view of a fan cowl support beam with connectors.
Figure 5 is a schematic end view of a bushing.
Figure 6 is a side view of a bushing mounted in an opening of a mounting member.
Figure 7 is a side view of a bushing mounted in an opening of a mounting member.
Figure 8A is a side view of a bushing with no external forces being applied.
Figure 8B is a side view of the bushing of Figure 8A with a first force amount being applied.
Figure 8C is a side view of the bushing of Figures 8A and 8B with a larger second force amount being applied.
Figure 9 is a flowchart diagram of a method of a bushing protecting components when a force is applied.
Figure 10 is a schematic side view of bushings supporting connectors that connect together two components.

### DETAILED DESCRIPTION

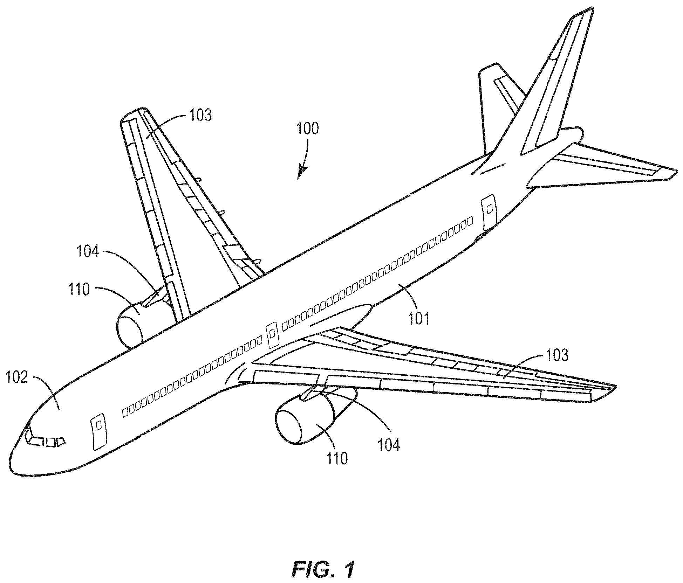

Figure 1 illustrates an aircraft 100 configured to transport passengers and/or cargo. The aircraft 100 generally includes a fuselage 101 with an interior space configured to accommodate the passengers and/or cargo. The interior space of the fuselage 101 also includes a flight deck 102 with various controls to enable flight personnel to control the aircraft 100. Engines 110 are mounted on the wings 103 on opposing sides of the fuselage 101. The engines 110 are mounted under the wings 103 to strut boxes 104.

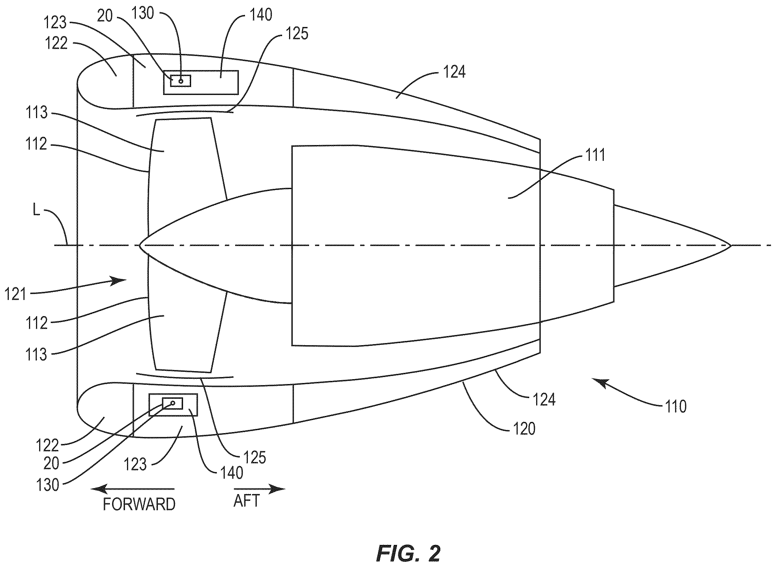

Figure 2 schematically illustrates a section view of the engine 110. The engine 110 includes an engine core 111 and a nacelle 120. The engine core 111 can include a variety of different configurations, including but not limited to a gas turbine engine. The engine 110 includes a fan 112 with blades 113 to draw air into the engine core 111. A fan case 125 is positioned radially outward from the fan 112. The nacelle 120 extends around and protects the engine core 111 and fan 112. The nacelle 120 includes a generally cylindrical shape with an inlet 121 through which air is drawn into the fan 112 and engine core 111. The nacelle 120 is divided into multiple different sections along its length. An inlet cowl 122 is positioned at a forward end of the nacelle 120. A fan cowl 123 is positioned aft of the inlet cowl 122 and is aligned to extend around the fan 112. The nacelle 120 also includes a trans cowl 124 aft of the fan cowl 123. The trans cowl 124 is configured to translate along a longitudinal axis L relative to the engine core 111 during a thrust reverser process. The engine 110 includes a fan cowl support beam 140 that supports various components. The fan cowl support beam 140 is connected to the fan case 125 and the fan cowl 123.

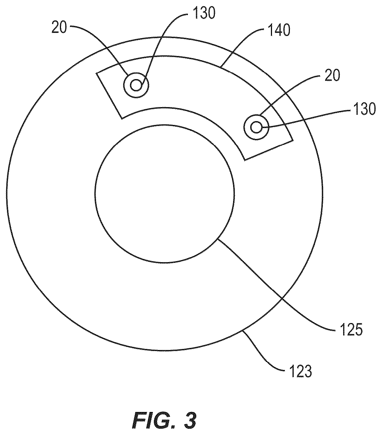

Figure 3 schematically illustrates the fan cowl support beam 140 that is connected to the fan case 125 and the fan cowl 123. Connectors 130 extend through the components to provide the connection. The connectors 130 can include various configurations with examples including but not limited to bolts and rivets.

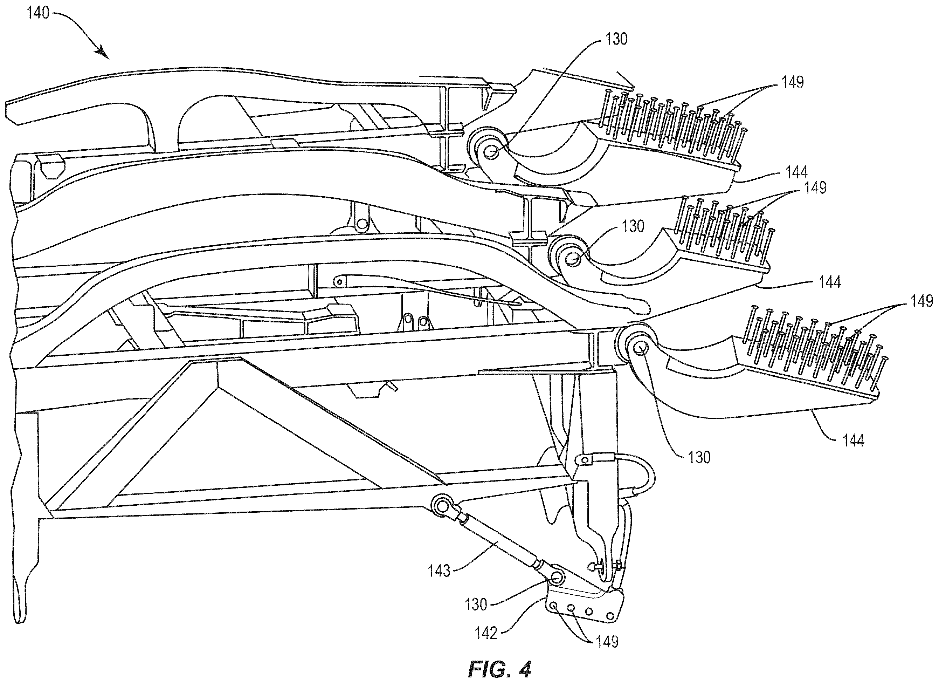

Figure 4 illustrates the fan cowl support beam 140 that includes a frame-like structure with a variety of beams arranged at various angular configurations. Connectors 130 movably connect arms 144 to the fan cowl support beam 140. The arms 144 in turn are configured to be connected to the fan cowl (not illustrated). Connectors 130 further connect mounts 142 to the fan cowl support beam 140. The mounts 142 in turn are configured to be connected to the fan case (not illustrated).

One or more of the connectors 130 extend through bushings 20. The bushings 20 are configured to crumple during application of an excessive force such as would occur during an FBO. The bushings 20 absorb a displacement wave during an FBO such that the energy wave does not propagate into the other components beyond the fan case 125. The bushings 20 further function as a normal bushings under normal operational loads. In some examples, a bushing 20 is used with each of the connectors 130. In other examples, bushings 20 are used on a limited number of the connectors 130.

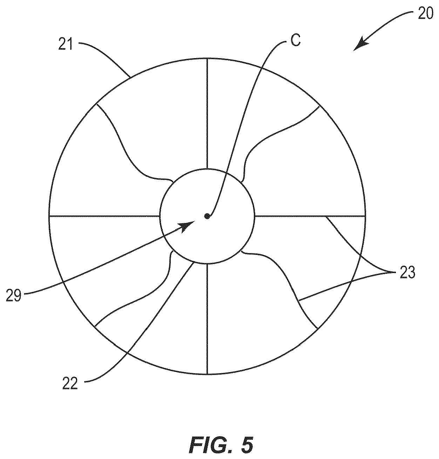

Figure 5 includes a bushing 20 that is configured to receive a connector (not illustrated). The bushing 20 includes an outer ring 21, an inner ring 22, and spokes 23. The outer ring 21 and the inner ring 22 each include a substantially circular shape. In some examples, each of the outer ring 21 and inner ring 22 are concentric around a center point C positioned within the center of the inner ring 22. The spokes 23 extend between the outer ring 21 and the inner ring 22. The spokes 23 can include a variety of different shapes and sizes. In some examples, one or more of the spokes 23 has a linear shape and one or more of the spokes 23 has a non-linear shape.

The bushing 20 is configured to absorb and/or withstand forces that are applied to the fan cowl support beam 140 from the fan case 125. During an FBO, one or more of the blades 113 break off from the fan 112. A large initial force is exerted on the fan case 125 due to this contact. Further, a large force/deflection wave is generated that travels around the fan case 125 as the now unbalanced fan 112 continues to spin during engine rundown. This windmilling of the engine 110 produces a high number of load cycles due to the imbalanced load. The bushings 20 are configured to withstand the forces applied during the FBO and maintain the fan case 125 connected to the fan cowl support beam 140.

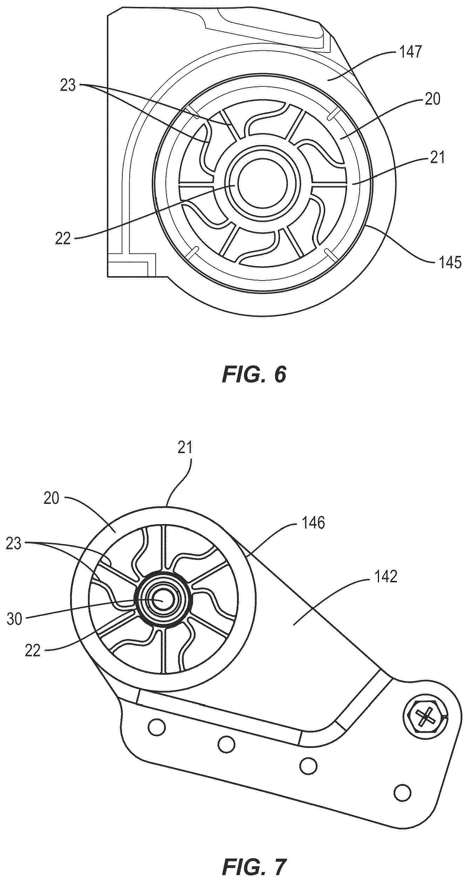

Figure 6 illustrates a bushing 20 mounted in an opening 145 in a hinge beam 147. The bushing 20 has a generally circular shape sized to fit within the opening 145. The bushing 20 includes an outer ring 21 that seats within the opening 145, an inner ring 22 with a central opening sized to receive the connector 130, and spokes 23 that extend between the outer ring 21 and the inner ring 22. Figure 7 illustrates a bushing 20 mounted in an opening 146 of a mount 142.

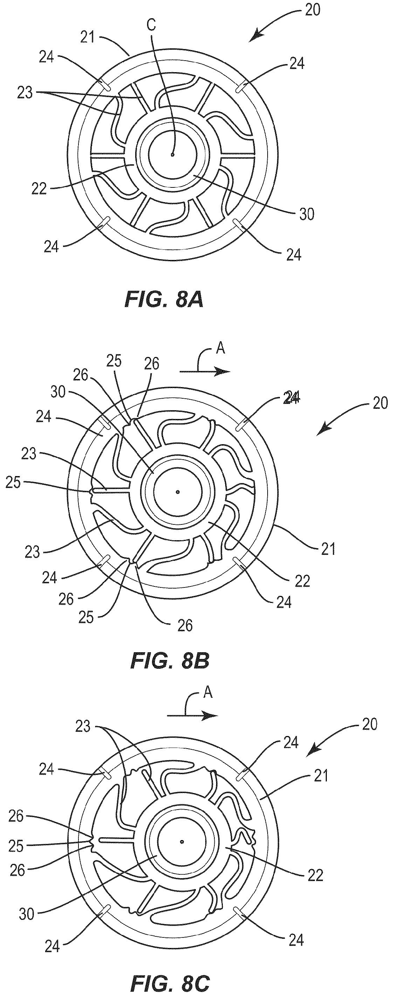

Figure 8A illustrates a bushing 20 in a first configuration. This first configuration occurs when no external forces are acting on the bushing 20. The bushing 20 includes an outer ring 21, inner ring 22, and spokes 23. The spokes 23 extend between the outer ring 21 and the inner ring 22. One or more of the spokes 23 have a non-linear shape. In some examples, the shape includes one or more curves. In the example or Figure 8A, each of these non-linear spokes 23 include the same shape, with other examples including two or more of the spokes 23 having different shapes. In addition to the non-linear spokes 23, one or more of the spokes 23 include a linear shape. These spokes 23 extend directly between the outer ring 21 and inner ring 22. In some examples, each of the linear spokes 23 extends outward from the outer ring 21 and is directed towards a center point C centered within the inner ring 22. In some examples, the bushing 20 is in this first configuration during normal operating conditions of the engine 110.

As illustrated in Figure 8B, the bushing 20 is configured for the inner ring 22 to move relative to the outer ring 21 due to a force that is applied through the connector such as during an FBO. In this example, the inner ring 22 has moved in the direction of arrow A relative to the outer ring 21. This applied force causes the spokes 23 to crumple to absorb the force. The extent of movement depends upon the extent of the force. Figure 8C illustrates the bushing 20 is a more crumpled configuration due to the application of additional force. The inner ring 22 has moved an additional distance in the direction of arrow A. This additional movement results in further crumpling of the spokes 23.

During the application of excessive force, the bushing 20 crumples to absorb the force. In some examples, the one or more bushings 20 absorb the entirety of the force. In other examples, the one or more bushings 20 absorb a portion of the force.

In some examples as illustrated in Figure 8A, the non-linear spokes 23 and the linear spokes 23 are evenly distributed around the inner ring 22. In other examples, one or both of the non-linear spokes 23 and linear spokes 23 are unevenly distributed around the inner ring 22.

In some examples as illustrated in Figure 5, each of the spokes 23 is connected to both of the outer ring 21 and the inner ring 22. In other examples, one or more of the spokes 23 is connected to just one of the outer ring 21 or the inner ring 22. Figures 8A-8C include a bushing 20 with the non-linear spokes 23 connected to each of the outer ring 21 and the inner ring 22. The linear spokes 23 are connected to just the inner ring 22. Outer ends of the linear spokes 23 are not connected to the outer ring 21. This construction enables the inner ring 22 to more freely move within the outer ring 21. As illustrated in Figure 8A, the outer ends of the linear spokes 23 contact against the outer ring 21 when no force is applied to the bushing 20. As illustrated in Figures 8B and 8C, the inner ring 22 moves away from the one side of the outer ring 21 (the left side as illustrated in these Figures). The outer ends of the linear spokes 23 on that side of the bushing 20 separate and move away outer ring 21. The linear spokes 23 on the other side of the bushing 20 (i.e., the right side in these Figures) remains in contact with the outer ring 21 and deform due to the applied force.

In some examples as illustrated in Figures 8A-8C, receptacles 25 are formed along the inner edges of the outer ring 21. The receptacles 25 are configured to receive the ends of the spokes 23. In some examples, the receptacles 25 include edge walls 26 one each side of a valley with the valley shaped and sized to conform to the ends of the spokes 23. In other examples, the inner edge of the outer ring 21 has a continuous curved surface (i.e., no receptacles). In this examples, the outer ends of the spokes 23 contact against the curved surface.

In some examples, slots 24 extend into the outer perimeter of the outer ring 21. The slots 24 enable the outer ring 21 to deform more readily during application of a force. In some examples as illustrated in Figures 8A-8C, the slots 24 are equally spaced apart around the perimeter of the outer ring 21. In other examples, the slots 24 are unevenly spaced apart. The slots 24 can each include the same shape and depth, or different shapes and/or depths. In other examples, no slots 24 are position on the outer ring 21.

In some examples as illustrated in Figure 5, the central opening 29 formed by the inner ring 22 receives the connector 130. In other examples as illustrated in Figures 8A-8C, a bearing member 30 is positioned within the inner ring 22 and configured to receive a connector (not illustrated). The bearing member 30 is connected to the inner ring 22. In some examples, the bearing member 30 is a spherical bearing that is swaged onto the inner ring 22.

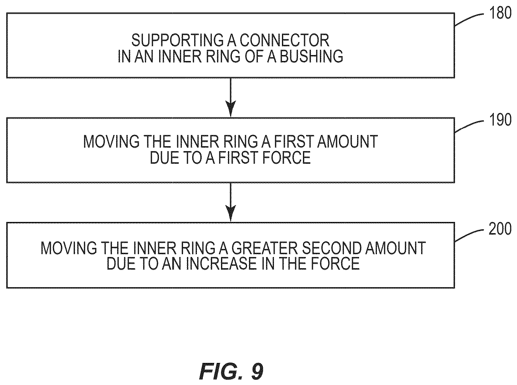

Figure 9 illustrates a method of using the bushing 20 and protecting engine components within an aircraft 100 with the engine components being connected together by a connector 130. The method includes supporting the connector 130 in an inner ring 22 of the bushing 20 (block 180). The bushing 20 is configured with the inner ring 22 centered within an outer ring 21 during operation of the engine 110. In some examples, normal operation of the engine 110 applies a force of between 600-900 lbs.

In response to an event load being applied to the bushing 20, the inner ring 22 is moved in a first direction a first amount towards the outer ring 21 and deforms the spokes (block 182). In response to an increase in the event load being applied to the bushing 20, the inner ring 22 is moved a greater amount (block 184). This results in the spokes 23 being deformed a greater amount. The amount of force and the extent of deformation can vary. In some examples, an FBO results in a force of 27,000 lbs being applied.

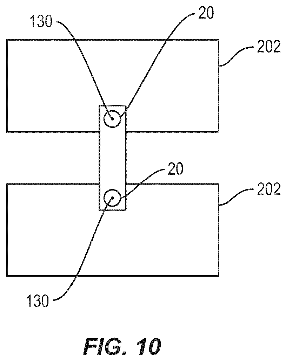

The bushing 20 has been disclosed within the context of use to absorb forces that occur during an FBO on an aircraft. The bushing 20 can also be used in other contexts to absorb loads between two different components. Figure 10 generally discloses a pair of bushings 20 used with connectors 130 that are connecting together two components 200, 202. The bushings 20 absorb forces that could occur between the components 200, 202.

In some examples used with an aircraft 100, the bushing 20 is mounted on new aircraft during manufacturing. The bushing 20 is also configured to be used to update existing aircraft 100.

The bushing 20 can be constructed from a variety of materials including but not limited to Inconel and spring steel.

The disclosure comprises embodiments according to the following clauses:
Clause 1. A bushing configured to receive a connector to connect engine components within an aircraft to absorb forces during a fan blade out, the bushing comprising:
   an outer ring;
   an inner ring that is positioned within and spaced inward from the outer ring, the inner ring comprising a central opening sized to receive the connector;
   spokes that extend between and connect together the outer ring and the inner ring; and
   wherein one or more of the spokes comprise a linear shape and one or more of the spokes comprise a non-linear shape.
Clause 2. The bushing of clause 1, wherein the outer ring and the inner ring comprise circular shapes and are concentric.
Clause 3. The bushing of clause 1 or 2, wherein the spokes are connected to the outer ring and the inner ring.
Clause 4. The bushing of any of clauses 1 to 3, wherein one or more of the spokes is connected to just one of the outer ring or the inner ring.
Clause 5. The bushing of any of clauses 1 to 4, wherein the spokes are arranged in pairs around the inner ring with the pairs comprising a first spoke with the linear shape and a second spoke with the non-linear shape.
Clause 6. The bushing of any of clauses 1 to 5, further comprising:
   one or more of the spokes comprise an inner end connected to the inner ring and an unconnected outer end;
   one or more receptacles positioned on the outer ring and comprising raised edges and an intermediate valley; and
   wherein the outer ends of spokes that are unconnected is sized to fit within one of the valleys to seat the inner end against the outer ring.
Clause 7. The bushing of any of clauses 1 to 6, wherein the spokes are evenly spaced apart around the inner ring.
Clause 8. The bushing of any of clauses 1 to 7, further comprising a bearing member mounted within the inner ring, the bearing member mounted against an inner side of the inner ring and away from an outer side of the inner ring.
Clause 9. The bushing of any of clauses 1 to 8, wherein the bushing is positioned between a fan case and a fan cowl of the aircraft.
Clause 10. The bushing of any of clauses 1 to 9, further comprising slots that extend into an outer perimeter of the outer ring with the slots being spaced apart around the perimeter of the outer ring.
Clause 11. A bushing configured to receive a connector to connect engine components within an aircraft, the bushing comprising:
   concentric inner and outer rings;
   spokes that extend between and connect together the outer ring and the inner ring, the spokes configurated to change shapes based on an amount of applied load;
   wherein the spokes comprise a first configuration with a first shape when an operational load is applied to the bushing; and
   wherein the spokes comprise a second configuration with a crumpled shape when an event load that is greater than the operational load is applied to the bushing.
Clause 12. The bushing of clause 11, wherein one or more of the spokes comprise a linear shape and one or more of the spokes comprise a non-linear shape.
Clause 13. The bushing of clause 12, wherein the spokes are arranged in pairs around the inner ring with each of the pairs comprising one of the spokes with the linear shape and one of the spokes with the non-linear shape.
Clause 14. The bushing of any of clauses 11 to 13, wherein the outer ring and the inner ring comprises circular shapes in the first configuration.
Clause 15. The bushing of any of clauses 11 to 14, further comprising a bearing member mounted within the inner ring with the bearing member configured to contact against the connector.
Clause 16. A method of protecting engine components within an aircraft with the engine components being connected together by a fastener that is positioned within an opening in a bushing, the method comprising:
   supporting a connector in an inner ring of the bushing with the inner ring centered within an outer ring of the bushing during operation of the engine;
   in response to an event load being applied to the bushing through the connector, moving the inner ring in a first direction a first amount towards the outer ring and deforming spokes that extend between the outer ring and the inner ring; and
   in response to an increase in the event load being applied to the bushing through the connector, moving the inner ring in the first direction a greater second amount and deforming the spokes a greater amount.
Clause 17. The method of clause 16, further comprising moving one or more of the spokes away from the outer ring while moving the inner ring in the first direction.
Clause 18. The method of clause 16 or 17, further comprising supporting the connector with the inner ring centered within the outer ring during operational loads and supporting the connector with the inner ring off-centered relative to the outer ring during the event load.
Clause 19. The method of any of clauses 16 to 18, further comprising deforming the outer ring in response to the increase in the event load applied to the bushing through the connector.
Clause 20. The method of any of clauses 16 to 19, further comprising deforming the bushing and absorbing the force between engine components within the aircraft.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A bushing configured to receive a connector to connect engine components within an aircraft to absorb forces during a fan blade out, the bushing comprising:
an outer ring (21);
an inner ring (22) that is positioned within and spaced inward from the outer ring (21), the inner ring (22) comprising a central opening (29) sized to receive the connector;
spokes (23) that extend between and connect together the outer ring (21) and the inner ring (22); and
wherein one or more of the spokes (23) comprise a linear shape and one or more of the spokes (23) comprise a non-linear shape.

2. The bushing of claim 1, wherein the outer ring (21) and the inner ring (22) comprise circular shapes and are concentric.

3. The bushing of claim 1 or 2, wherein the spokes (23) are connected to the outer ring (21) and the inner ring (22).

4. The bushing of any of claims 1 to 3, wherein one or more of the spokes (23) is connected to just one of the outer ring (21) or the inner ring (22).

5. The bushing of any of claims 1 to 4, wherein the spokes (23) are arranged in pairs around the inner ring (22) with the pairs comprising a first spoke with the linear shape and a second spoke with the non-linear shape.

6. The bushing of any of claims 1 to 5, further comprising:
one or more of the spokes (23) comprise an inner end connected to the inner ring (22) and an unconnected outer end;
one or more receptacles (25) positioned on the outer ring (21) and comprising raised edges (26) and an intermediate valley; and
wherein the outer ends of spokes (23) that are unconnected is sized to fit within one of the valleys to seat the inner end against the outer ring (21).

7. The bushing of any of claims 1 to 6, wherein the spokes (23) are evenly spaced apart around the inner ring (22).

8. The bushing of any of claims 1 to 7, further comprising a bearing member (30) mounted within the inner ring (22), the bearing member (30) mounted against an inner side of the inner ring (22) and away from an outer side of the inner ring (22).

9. The bushing of any of claims 1 to 8, wherein the bushing is positioned between a fan case and a fan cowl of the aircraft.

10. The bushing of any of claims 1 to 9, further comprising slots (24) that extend into an outer perimeter of the outer ring (21) with the slots (24) being spaced apart around the perimeter of the outer ring (21).

11. A bushing configured to receive a connector to connect engine components within an aircraft, the bushing comprising:
concentric inner and outer rings (21);
spokes (23) that extend between and connect together the outer ring (21) and the inner ring (22), the spokes (23) configurated to change shapes based on an amount of applied load;
wherein the spokes (23) comprise a first configuration with a first shape when an operational load is applied to the bushing; and
wherein the spokes (23) comprise a second configuration with a crumpled shape when an event load that is greater than the operational load is applied to the bushing.

12. The bushing of claim 11, wherein one or more of the spokes (23) comprise a linear shape and one or more of the spokes (23) comprise a non-linear shape, in particular wherein the spokes (23) are arranged in pairs around the inner ring (22) with each of the pairs comprising one of the spokes (23) with the linear shape and one of the spokes (23) with the non-linear shape.

13. The bushing of claim 11 or 12, wherein the outer ring (21) and the inner ring (22) comprises circular shapes in the first configuration.

14. The bushing of any of claims 11 to 13, further comprising a bearing member (30) mounted within the inner ring (22) with the bearing member (30) configured to contact against the connector.

15. A method of protecting engine components within an aircraft with the engine components being connected together by a fastener that is positioned within an opening in a bushing, the method comprising:
supporting a connector in an inner ring (22) of the bushing with the inner ring (22) centered within an outer ring (21) of the bushing during operation of the engine;
in response to an event load being applied to the bushing through the connector, moving the inner ring (22) in a first direction a first amount towards the outer ring (21) and deforming spokes (23) that extend between the outer ring (21) and the inner ring (22); and
in response to an increase in the event load being applied to the bushing through the connector, moving the inner ring (22) in the first direction a greater second amount and deforming the spokes (23) a greater amount.
